# FASCICULE DE BREVET EUROPEEN

(11) **EP 3 662 114 B1**
(45) Date de publication et mention de la délivrance du brevet: **26.02.2025**
(21) Numéro de dépôt: 18746236.1
(22) Date de dépôt: 03.08.2018
(51) Int. Cl.: E04B 1/10, E04B 2/70, E04C 2/12, E04H 9/02, E04C 2/42

(54) **PROCÉDÉ DE FABRICATION D'UN ÉLÉMENT CONSTRUCTIF À LAMES PRÉALABLEMENT PRESSÉES**
VERFAHREN ZUR HERSTELLUNG EINES KONSTRUKTIONSELEMENTS MIT VORGEPRESSTEN PLATTEN
METHOD OF PRODUCING A CONSTRUCTION ELEMENT WITH PRE-PRESSED BOARDS

(30) Priorité: 03.08.2017 FR 1757473
(43) Date de publication de la demande: 10.06.2020
(73) Titulaire: Leko Labs SA, 3290 Luxembourg (LU)
(72) Inventeur: BOUCHÔOU, Jeanne, 83130 La Garde (FR); CORDIER, François-Xavier, 57000 Metz (FR); DEFER, Gael, 88270 Bocquegney (FR)
(74) Mandataire: Lautier, Thierry
(86) Numéro de dépôt international: PCT/EP2018/071166
(87) Numéro de publication internationale: WO 2019/025605

(56) Documents cités:
- WO-A1-2008/086636
- WO-A1-2018/065729
- WO-A1-2018/065729
- DE-B3- 10 359 995
- FR-A1- 3 056 997
- FR-A1- 3 056 997
- FR-A3- 2 737 745
- US-A- 1 289 147

## Description

La présente invention concerne le domaine des systèmes constructifs destinés à la construction d'éléments en bois tels que des habitations ou des petits collectifs.

Différentes techniques sont d'ores et déjà connues pour concevoir et fabriquer des systèmes constructifs à partir d'éléments constructifs en bois.

Par « élément constructif », on entend tout type d'élément susceptible d'équiper un système constructif, qu'il soit porteur ou non, par exemple, de façon non limitative, un panneau, une cloison, un poteau, une poutre ou encore une fenêtre.

FR2737745A3, qui montre le préambule de la revendication 1, divulgue une construction industrialisée utilisant des assemblages capables de transmettre des efforts importants dans des structures et concerne un procédé d'assemblage coplanaire de pièces d'ossature bois. US1289147A divulgue une plaque de verrouillage pour des assemblages par boulons, dans laquelle la plaque de verrouillage est interposée entre des poutres en bois autour du boulon, afin de verrouiller les poutres en bois ensemble. WO2018065729A1 divulgue un système et un procédé de construction comprenant l'utilisation d'un ensemble d'éléments constitutifs, dont au moins un comprend au moins deux plis superposés comprenant chacun au moins deux lames structurelles en bois. FR3056997A1 divulgue un système et un procédé de construction comprenant l'utilisation d'un ensemble d'éléments constitutifs dont au moins l'un comprend au moins deux plis superposés comprenant chacun au moins deux lames structurelles en bois.

Selon l'une des techniques connues, un élément constructif peut être formé d'un ensemble de plis (ou de couches) superposés les uns sur les autres.

Dans une première configuration, chaque pli comprend une lame structurelle en bois - ou une pluralité de lames structurelles en bois et parallèles entre elles - et les plis successifs viennent en appui les uns sur les autres.

Dans une deuxième configuration, dite « CLT » ou « Bois Lamellé Croisé » (ou, en langue anglo-saxonne, « Cross Laminated Timber »), dans chaque pli, les lames structurelles en bois sont disposées les unes à la suite des autres et sont parallèles entre elles. De plus, les plis sont agencés, les uns par rapport aux autres, de sorte que les lames d'un pli soient orthogonales aux lames d'un pli adjacent.

Dans chacune de ces configurations, les lames structurelles d'un premier pli sont juxtaposées aux lames structurelles d'un deuxième pli, adjacent au premier pli, et sont maintenues les unes contre les autres. Dans cette configuration, une face d'une lame du premier pli et une face d'une lame du deuxième pli sont ainsi en contact au niveau d'un plan formant une interface de contact.

Afin d'améliorer le blocage des lames structurelles dans le plan de l'interface de contact, il est également connu de disposer sur les faces des lames structurelles ainsi en contact un ensemble de motifs, par exemple des motifs rainurés. Ces motifs peuvent être agencés de manière que les motifs respectifs des faces des lames en contact coopèrent et fassent obstacle au glissement de ces lames les unes par rapport aux autres dans le plan de leur interface de contact. Ce blocage est d'autant meilleur dans le cas où les motifs rainurés présentent des formes au moins sensiblement complémentaires.

Dans cette dernière configuration, il importe de maintenir les lames structurelles des plis adjacents les unes contre les autres suivant l'axe orthogonal au plan des lames (qui est aussi le plan de l'interface de contact entre les lames) par l'intermédiaire d'un ou plusieurs systèmes de maintien.

L'un des enjeux principaux de ce système est non seulement de maintenir au mieux les lames structurelles les unes contre les autres mais également de permettre une bonne transmission et une bonne reprise des efforts transmis par les lames en appliquant un effort de compression localement sur l'assemblage.

Dans ce contexte, on parle d'un effort « en compression local » pour désigner un effort qui s'exerce suivant l'axe orthogonal au plan des lames, ainsi que d'un effort « en cisaillement » pour désigner un effort qui s'exerce dans le plan des lames (qui est aussi le plan de l'interface de contact entre les lames).

La reprise - ou transmission - des efforts d'une lame à une autre permet d'assurer une résistance mécanique élevée à l'assemblage et de lutter contre le mouvement naturel des motifs rainurés qui écarte les lames les unes des autres. Il est donc souhaitable que le système de maintien permette une telle transmission des efforts.

Par ailleurs, quand bien même les motifs rainurés sont complémentaires, ceux-ci ne s'emboîtent en pratique jamais parfaitement et font donc généralement apparaître un espace entre les lames au niveau de l'interface de contact, ce qui est défavorable à une reprise des efforts par frottement des surfaces de motifs rainurés.

Un premier système de maintien connu consiste en une couche de colle au niveau de l'interface de contact. La colle présente toutefois plusieurs inconvénients. En premier lieu, son impact écologique est particulièrement néfaste et il convient donc de limiter la quantité de colle utilisée. En deuxième lieu, la colle ne favorise pas l'industrialisation, notamment puisqu'elle nécessite de longs temps de pressage et de séchage. En troisième lieu, la colle peut être préjudiciable du point de vue de la résistance sismique, car les assemblages collés n'ont aucune plasticité et vont donc rompre brutalement en cas de sollicitations trop importantes.

A titre d'alternative, des systèmes de maintien dépourvus de colle sont également connus. Une première catégorie de systèmes non collants comprend des organes de type broches, anneaux ou crampons et des organes de type pointes ou agrafes. Néanmoins, la géométrie de ces organes n'offre pas une forte résistance à l'arrachement pour lutter contre la traction induite entre les systèmes de maintien et le bois des lames du fait du glissement naturel des motifs rainurés.

Une deuxième catégorie de systèmes non collants inclut des organes de type tige pourvue d'un filetage, notamment des boulons et des vis. Les boulons sont toutefois inadaptés pour une production industrielle, puisqu'ils nécessitent une étape de préperçage et un espace pour l'écrou. De plus, ils impliquent un jeu autour de leur corps, ce qui ne permet la reprise d'efforts en traction qu'à l'emplacement de l'écrou.

En particulier, aucun système de maintien connu ne tient véritablement compte des motifs rainurés pour permettre une transmission convenable des efforts entre deux lames structurelles superposées. L'objet de la présente invention est donc, dans un élément constructif composé de lames structurelles en bois superposées et pourvues de motifs rainurés, d'améliorer la transmission des efforts entre les lames et donc d'améliorer la résistance mécanique de l'élément constructif ainsi composé.

A cette fin, un élément constructif est fourni selon un exemple non-revendiqué. L'élément constructif comprend au moins deux lames structurelles en bois agencées de manière qu'une face de la première lame et une face de la deuxième lame sont superposées au niveau d'une interface de contact, les faces superposées étant au moins partiellement pourvues d'un ensemble de motifs rainurés au niveau de l'interface de contact, les motifs ayant des formes au moins sensiblement complémentaires et étant agencés de manière à faire obstacle au glissement de la première lame et de la deuxième lame l'une par rapport à l'autre suivant au moins un axe, et au moins un système de maintien agencé de manière à maintenir au moins deux lames l'une contre l'autre au niveau de l'interface de contact. Selon l'exemple, les motifs rainurés des faces superposées sont préalablement pressés les uns contre les autres, et le système de maintien comprend au moins un organe à tige filetée métallique traversant -au moins partiellement- au moins deux des lames structurelles en bois au niveau de l'interface de contact.

Grâce à la configuration de l'élément constructif, les motifs rainurés sont pressés les uns contre les autres avant d'être maintenus ensemble par le système de maintien. Cet appui préalable permet de faire s'emboîter plus précisément les motifs rainurés les uns dans les autres et améliore la transmission des efforts et la résistance mécanique de l'ensemble. De surcroît, lorsque la pression appliquée préalablement sur les lames dépasse un certain seuil, les motifs rainurés peuvent être légèrement déformés, ce qui participe également à la mise en contact et à la coopération des motifs rainurés et, ce faisant, à la transmission des efforts. De surcroît, cette mise en contact préalable permet de positionner les lames les unes par rapport aux autres avec une plus grande précision avant de procéder au maintien de celles-ci ensemble, ce qui améliore d'autant plus la coopération des lames et des motifs rainurés entre eux.

De plus, l'exemple permet de bénéficier d'autres avantages amenés entre autres par les organes à tige filetée métallique, notamment leur vitesse de pénétration dans les lames structurelles en bois, ainsi que la forte résistance à l'arrachement dans le bois dont ces organes bénéficient. Le maintien peut donc être assuré plus facilement, avec une fiabilité plus élevée et en minimisant le risque de fendre le bois.

En outre, l'exemple permet de tirer profit des motifs rainurés en évitant l'utilisation de colle au niveau de l'interface de contact. L'élément constructif ainsi constitué évite donc d'utiliser - ou à tout le moins utilise peu - de colle. Il s'ensuit que l'ensemble des problèmes précités liés à la colle peuvent être surmontés. De surcroît, en favorisant un assemblage par motifs rainurés, l'exemple rend avantageux l'utilisation de bois de feuillus pour former les lames structurelles. En effet, on classe généralement le bois en deux catégories : le bois résineux et le bois de feuillus. Le bois résineux est généralement préféré au bois de feuillus pour son prix moindre et sa facilité de séchage dans le domaine de la construction. Le bois de feuillus présente une plus grande densité. Puisque la qualité et Pusinabilité des motifs rainurés est liée directement à la densité et à la résistance mécanique locale de la fibre de bois, celle-ci s'en trouve facilitée avec le bois de feuillus, quels que soient l'aspect visuel et la qualité du bois d'origine.

Dans le procédé selon l'invention, les motifs rainurés sont agencés de manière à faire obstacle au glissement de la première lame et de la deuxième lame l'une par rapport à l'autre suivant au moins deux axes non-parallèles. Le blocage est ainsi assuré dans l'ensemble du plan de l'interface de contact.

De préférence, les motifs rainurés comprennent une première série de rainures parallèles entre elles, et une deuxième série de rainures parallèles entre elles mais non parallèles aux rainures de la première série. Les motifs rainurés se présentent alors sous forme de pointes (dont les extrémités peuvent être ou non pointues selon, notamment, les conditions d'industrialisation).

De préférence encore, au moins une partie des motifs rainurés présente la forme d'une matrice de picots, dont les formes sont sensiblement celles d'une pyramide à base quadrilatérale. Cette forme de motifs s'avère plus facile à usiner.

Dans un mode de réalisation particulier, l'organe comprend une tige filetée pourvue d'une tête et d'une pointe, disposées à des extrémités opposées de la tige.

Cette tête est plus grande que le diamètre du corps de la vis, sa dimension résulte d'un compromis entre une faible dimension pour ruiner le moins de motifs rainurés possibles et une dimension suffisante pour y créer une empreinte standard permettant un couplage suffisant au moment de l'insertion. En effet lorsque la vis est insérée, l'empreinte subit un certain couple (ou effort) qui va permettre de pénétrer la matière. La forme de cette empreinte est le standard TORX, liée au diamètre de la tête ; elle est sélectionnée pour correspondre au couple nécessaire mais également pour diminuer le risque d'éjection de l'outil lors de l'insertion de la vis. La pointe permet un effet de préperçage (vis « auto-foreuse ») et diminue le risque de fendage du bois lors de l'insertion.

De préférence, l'organe présente une forme générale cylindrique.

Dans un mode de réalisation préféré, la tige de l'organe comprend au moins deux filetages enchevêtrés de diamètres différents. Les caractéristiques classiques d'un filetage sont son pas et son diamètre. Plus le pas du filetage est grand, plus la vitesse de pénétration dans le bois est élevée. Plus le diamètre du filetage est grand, plus il fait travailler localement le bois en cisaillement. Dès lors, en prévoyant deux filetages de diamètres différents, on assure le travail local du bois dans deux plans de cisaillement différents, ce qui a pour effet de renforcer la résistance mécanique de l'assemblage et de réduire le temps de pénétration de la vis par la grandeur du pas de la vis liée à l'existence des deux filetages.

De préférence, le rapport entre le diamètre du filetage le plus large et le diamètre de la tige est compris entre 1,5 et 1,7. Ce rapport a été identifié comme particulièrement adapté à l'utilisation de lames en bois de feuillus.

De préférence, le système de maintien comprend quatre organes à tige filetée métallique répartis sur l'ensemble de l'interface de contact et traversant au moins partiellement au moins deux desdites lames structurelles en bois au niveau de l'interface de contact, ce qui permet de couvrir le plus possible de surface de l'interface de contact avec un minimum d'organes (plus le nombre d'organes traversant les motifs rainurés est important, moins il reste de motifs rainurés pour assurer le blocage dans le plan de l'interface de contact).

Dans un mode de réalisation, la distance qui sépare au moins l'un des organes à tige filetée du bord de l'interface de contact est comprise entre 1,5 et 4 centimètres. Le système de maintien considéré est ainsi placé sur la partie périphérique de l'interface de contact, c'est-à-dire à l'endroit où les efforts sont les plus forts lorsque l'assemblage subit un moment et de façon à bien plaquer toute la surface.

Dans le cas où l'élément constructif qui résulte du procédé selon l'invention comprend au moins trois lames structurelles en bois dont au moins certaines des faces sont deux à deux superposées au niveau d'interfaces de contact respectives, de préférence, le système de maintien comprend un premier ensemble d'organes à tige filetée métallique traversant au moins partiellement une première partie des lames et un deuxième ensemble d'organes à tige filetée métallique traversant au moins partiellement une deuxième partie des lames, la première et la deuxième parties de lames ayant au moins une lame en commun, les organes étant décalés les unes par rapport aux autres dans les plans des interfaces de contact des lames. Cette configuration permet d'éviter qu'un seul organe ait à traverser l'épaisseur de toutes les lames, ce qui nécessiterait d'augmenter le diamètre des organes et de diminuer la précision de l'assemblage. Les organes traversant deux épaisseurs, il est nécessaire d'éviter une collision entre les organes. De plus pour des raisons de symétrie, le positionnement du deuxième organe est identique à celle du premier organe après une rotation de 90° par rapport au centre du système de maintien Cette configuration permet de traverser toute l'épaisseur de l'élément constructif par chevauchement d'un jeu d'organes pour trois ou plusieurs lames, compte tenu des dimensions des organes. De plus, la longueur d'au moins l'une des organes à tige filetée métallique est sensiblement égale à l'épaisseur cumulée de la partie de lames qu'il est destiné à maintenir ensemble. Dès lors, la tige et le filetage pénètrent les lames sur toute leur épaisseur, ce qui augmente la proportion de matière sollicitée et améliore la résistance à l'arrachement de la tige dans le bois et donc le maintien de la précontrainte des motifs rainurés.

De préférence, au moins l'un des organes à tige filetée métallique est positionné dans un creux des motifs rainurés (c'est-à-dire au niveau l'extrémité basse qui entoure chaque motif et relie les motifs entre eux), ce qui permet de faciliter la pénétration de l'organe.

Dans le procédé selon l'invention, les motifs rainurés des faces superposées sont préalablement pressés les uns contre les autres avec une pression d'au moins 75 kPa.

L'exemple propose en outre d'améliorer l'agencement du (ou des) système(s) de maintien vis-à-vis des lames structurelles. Dans ce cadre, le diamètre d'au moins l'une des organes est configuré pour couvrir au plus quatre motifs rainurés. Le système endommage ainsi le moins de motifs rainurés possibles.

La présente invention concerne un procédé de fabrication d'un élément constructif tel que décrit ci-dessus, qui est prévu selon la revendication 1..

Dans ce procédé de fabrication, préalablement à leur superposition, les faces des lames structurelles destinées à être superposées sont usinées de façon à les pourvoir des motifs rainurés.

Un système constructif comprenant au moins deux éléments constructifs, dont au moins l'un est tel que décrit ci-dessus, est fourni selon un deuxième exemple non-revendiqué.

D'autres caractéristiques et avantages de l'invention apparaîtront à la lecture de la description qui suit de modes de réalisation de l'invention, donnés à titre d'exemple et en référence aux dessins annexés.

La figure 1 est une vue en perspective d'un exemple de système constructif selon la présente invention.

La figure 2 est une vue en perspective de l'un des éléments constitutifs du système constructif de la figure 1, selon la présente invention.

Les figures 3 et 4 sont des vues en perspective de deux lames structurelles d'un élément constructif, selon un premier mode de réalisation de la présente invention.

Les figures 5 et 6 sont des vues en perspective de deux lames structurelles d'un élément constructif, selon un deuxième mode de réalisation de la présente invention.

Les figures 7 et 8 sont des vues en coupe de trois lames structurelles d'un élément constructif, selon un troisième mode de réalisation de la présente invention.

La figure 9 est une vue de dessus d'une interface de contact entre deux lames.

Les figures 10A et 10B sont des vue rapprochées de l'interface de la figure 9.

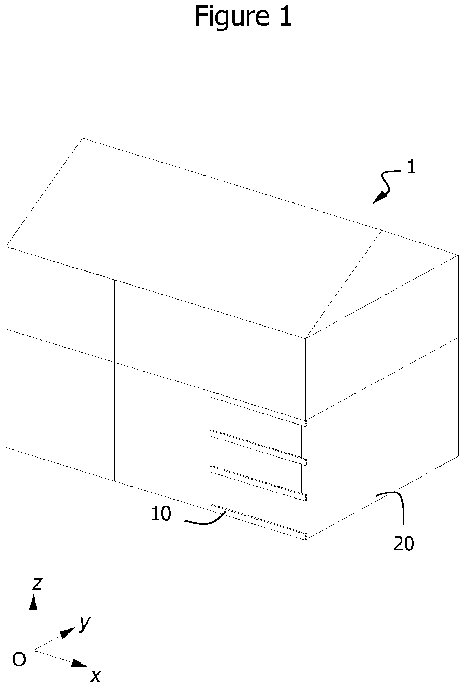

La figure 1 est une vue en perspective d'un exemple de système constructif avec des éléments fabriqués par le procédé selon la présente invention.

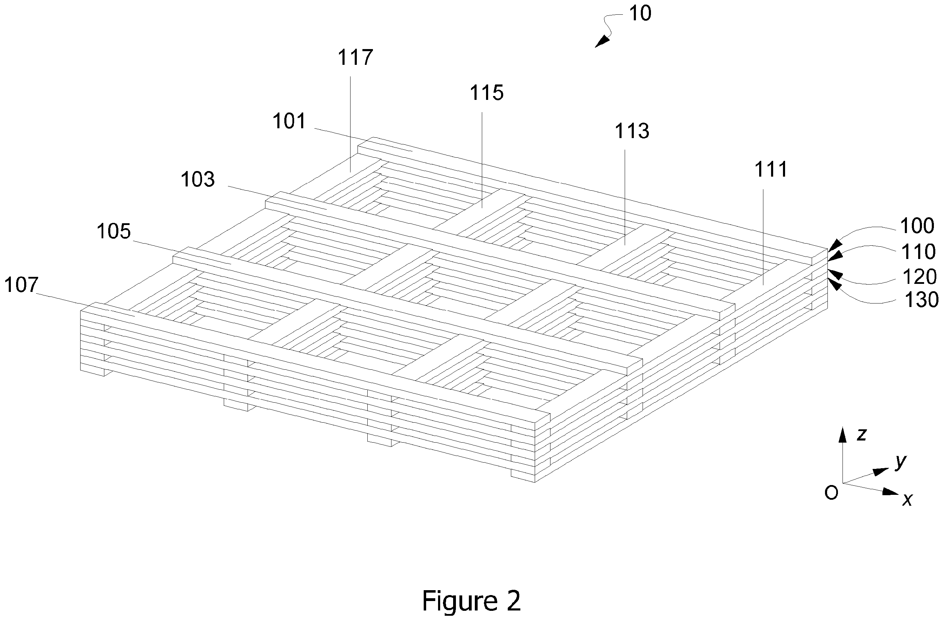

La figure 2 est une vue en perspective de l'un des éléments constitutifs du système constructif de la figure 1, fabriqué par le procédé selon la présente invention.

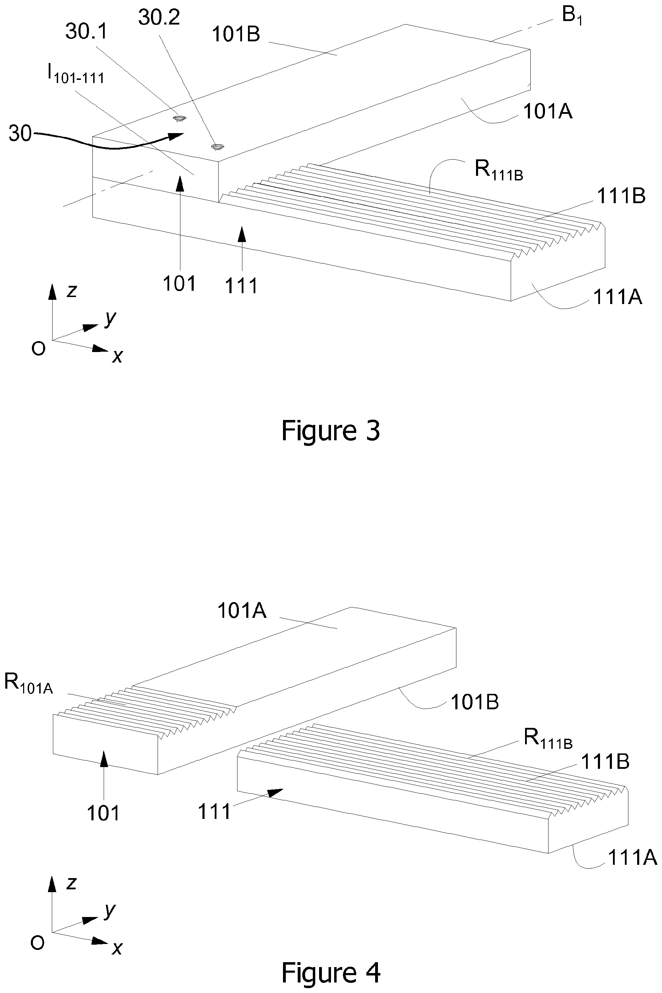

Les figures 3 et 4 sont des vues en perspective de deux lames structurelles d'un élément constructif, selon un premier mode de réalisation du procédé de la présente invention.

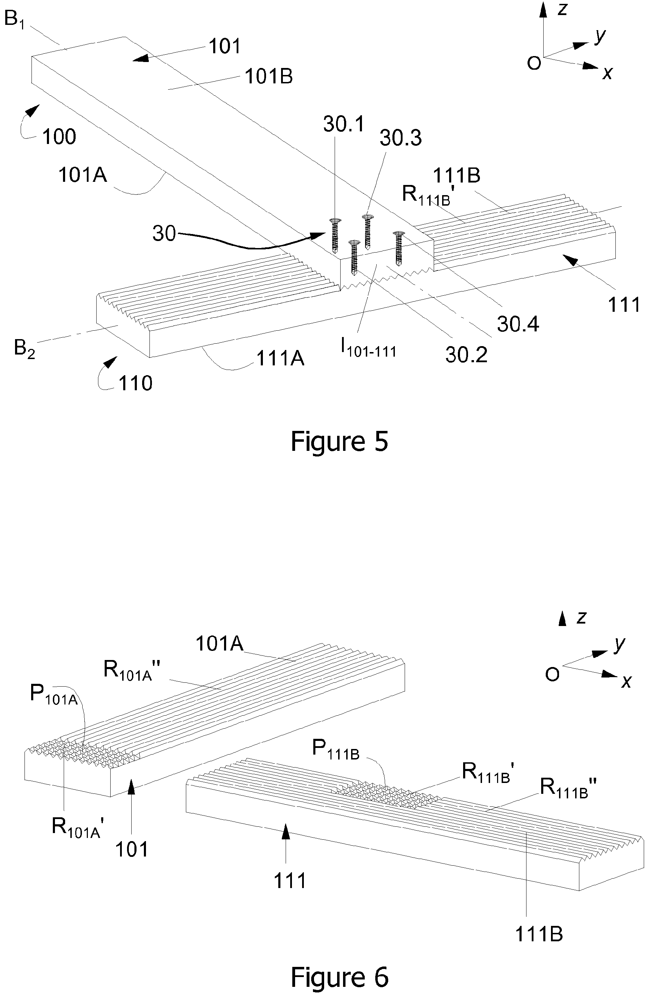

Les figures 5 et 6 sont des vues en perspective de deux lames structurelles d'un élément constructif, selon un deuxième mode de réalisation du procédé de la présente invention.

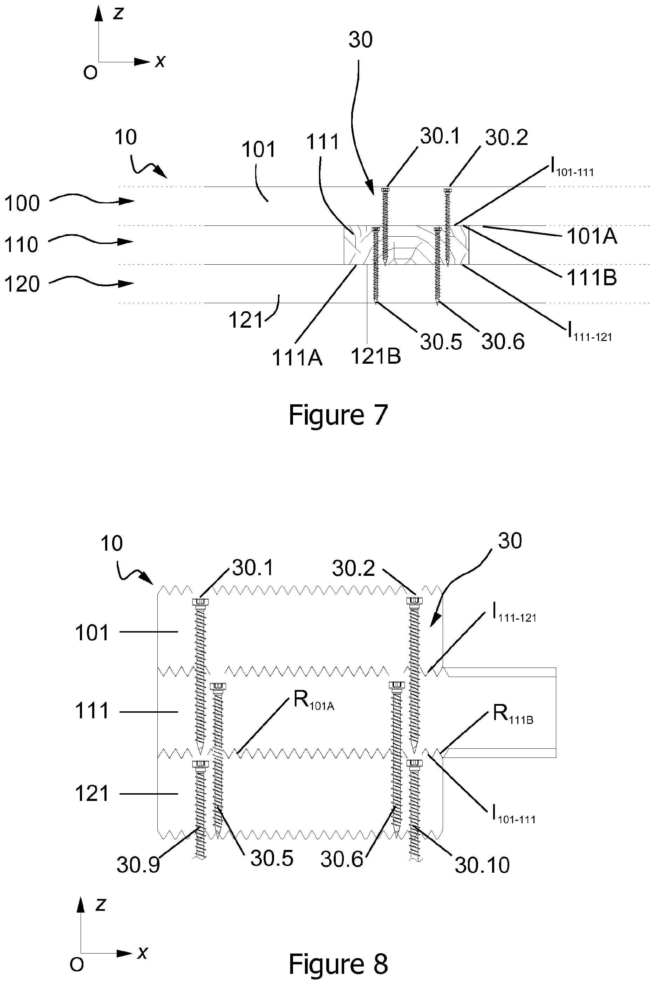

Les figures 7 et 8 sont des vues en coupe de trois lames structurelles d'un élément constructif, selon un troisième mode de réalisation du procédé de la présente invention.

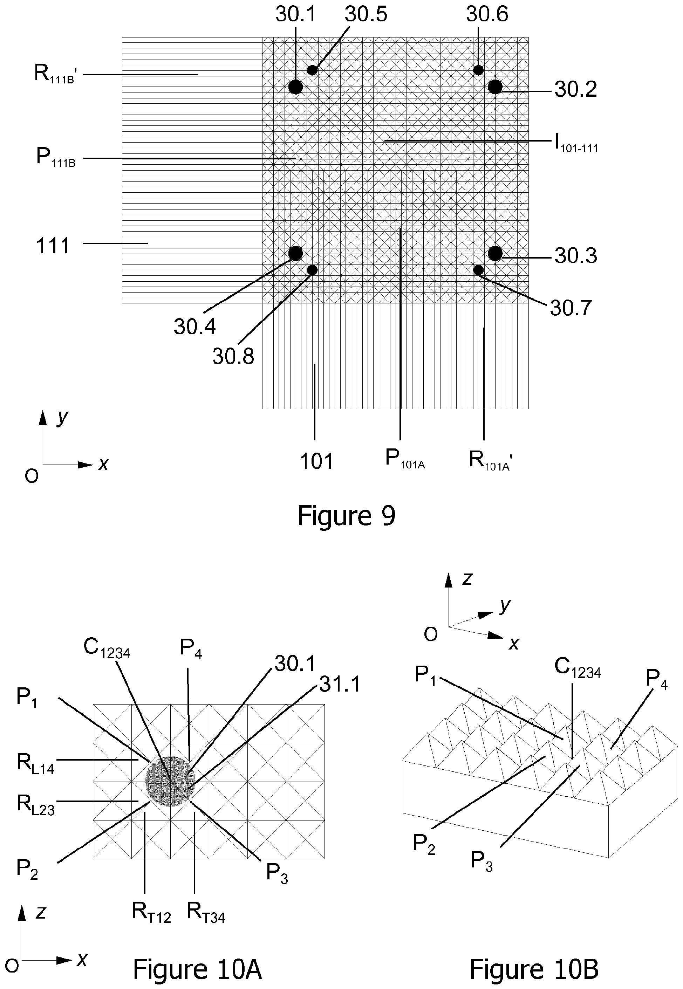

La figure 9 est une vue de dessus d'une interface de contact entre deux lames.

Les figures 10A et 10B sont des vue rapprochées de l'interface de la figure 9.

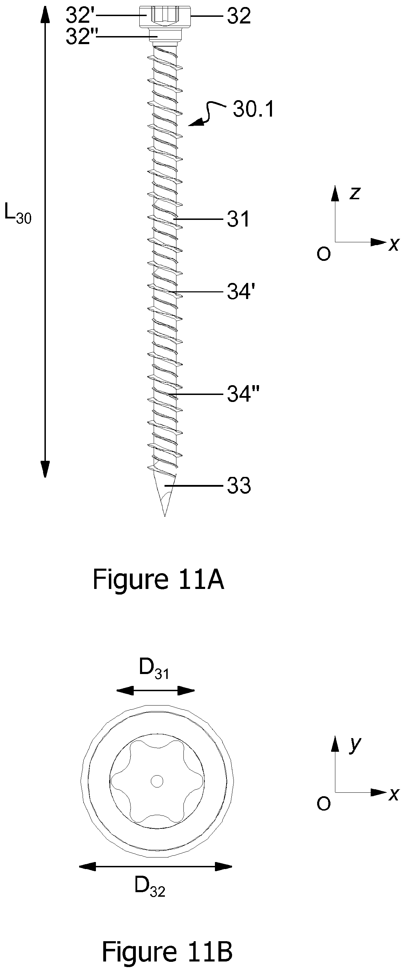

Les figures 11A et 11B sont respectivement une vue latérale et une vue de dessus d'un organe d'un système de maintien selon un mode de réalisation du procédé de l'invention.

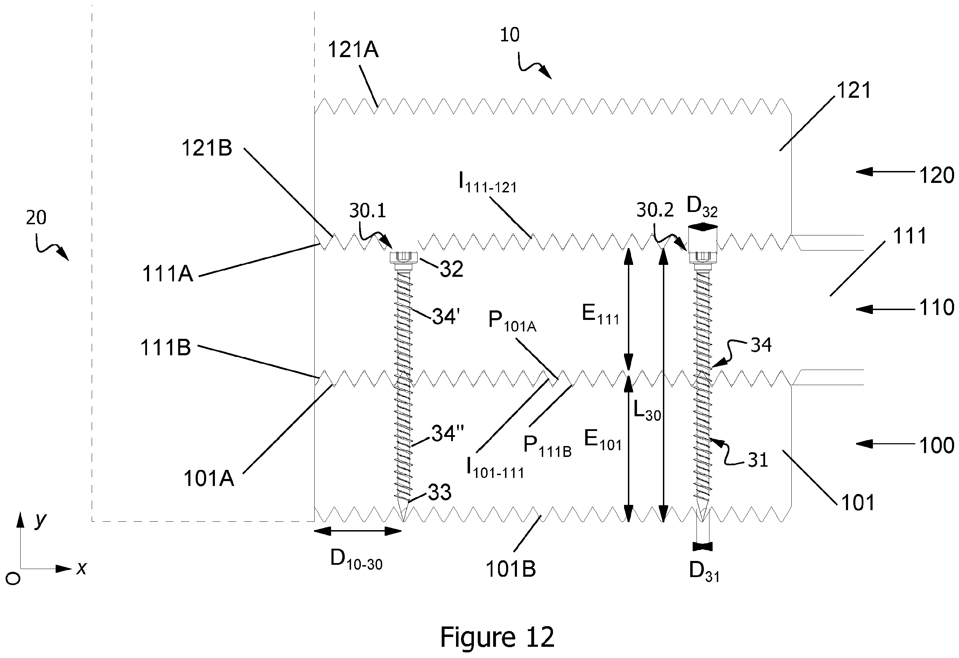

La figure 12 est une vue en coupe détaillée d'un élément constructif selon un mode de réalisation du procédé de la présente invention.

En référence à la figure 1, un système constructif 1 fabriqué selon le procédé de la présente invention peut se présenter sous la forme d'une habitation en bois, bien que toutes autres formes d'édifice puissent être envisagées. Cette habitation comporte notamment un plancher, des murs et un rampant de toiture. Ils peuvent par exemple être constitués en bois. Des ouvertures peuvent être pratiquées dans plusieurs de ces éléments, par exemple sur l'un des murs afin d'y apposer une fenêtre.

Dans cet exemple, un premier mur comprend un ensemble d'éléments constructifs dont l'élément constructif 10. Un deuxième mur lui-même comprend un ensemble d'éléments constructifs dont l'élément 20. Ce découpage en éléments constructifs tient aux limites de dimensionnement des transports standards, des moyens de levage dans la construction et des outils industriels de fabrication de ces éléments.

L'élément constructif 10 est représenté plus en détails sur la figure 2. Le premier élément constructif 10 de la figure 2 comprend un ensemble de huit plis superposés, dont les quatre premiers sont les plis 100, 110, 120 et 130. La configuration des plis est dite « à lames croisées ». Un nombre différent de plis peut être prévu, par exemple supérieur à trois, de préférence compris entre cinq et quinze, de préférence compris entre sept et douze. La détermination du nombre optimal de plis est un arbitrage entre la performance thermique de l'élément constructif 10, sa solidité (d'autant meilleure qu'il y a de plis), son épaisseur globale (qui, usuellement, ne doit pas dépasser une certaine limite), son coût et son application (murs intérieurs, extérieurs, planchers ou rampants, etc.).

Chacun des plis 100, 110, 120 et 130 comprend des lames structurelles en bois. Le premier pli 100 comprend quatre lames 101, 103, 105 et 107 parallèles et orientées suivants l'axe (Ox). Le deuxième pli 110 comprend quatre lames 111, 113, 115 et 117 parallèles et orientées suivant l'axe (Oy). Le troisième pli 120 comprend quatre lames parallèles et orientées suivant l'axe (Ox). Le quatrième pli 130 comprend quatre lames parallèles et orientées suivant l'axe (Oy). Dans cette configuration « à lames croisées » ; les plis 100, 110, 120 et 130 sont constitués alternativement de lames parallèles selon l'axe (Ox) et de lames parallèles selon l'axe (Oy). Les lames structurelles de deux plis adjacents sont orthogonales entre elles et forment ensemble un quadrillage couvrant l'ensemble de l'élément constructif 10.

Les lames d'un même pli peuvent être orientées selon la même direction et sont espacées les unes des autres de façon à couvrir de façon sensiblement uniforme l'ensemble de l'élément constructif 10. Ces lames sont orientées de façon que les lames d'un pli soient orthogonales aux lames d'un pli adjacent, mais il pourrait également être prévu un angle différent entre ces lames. Par ailleurs, le nombre de lames structurelles pour chaque pli résulte d'un arbitrage entre l'économie de bois, d'une part, et la solidité et la dimension de l'élément constructif, d'autre part.

Une lame fonctionnelle (non représentée) peut être intercalée entre deux lames structurelles d'un même pli. Cette lame fonctionnelle est destinée à remplir une fonction spécifique, différente de celle des lames structurelles, autrement dit elle ne sert pas à soutenir l'élément constructif et n'est pas constituée de bois massif (mais elle peut être constituée de certains types d'isolants, tels que de la laine de bois, qui ne sont pas reconnus comme ayant des propriétés porteuses). Le choix de sa matière constitutive dépend de la fonction que l'on souhaite lui conférer. Cette fonction peut se rapporter à l'isolation thermique et/ou acoustique, à l'inertie thermique, à la résistance au feu ou encore à toute autre fonctionne considérée comme appropriée. De plus, l'économie de bois nécessite de compléter l'absence de matière des lames structurelles par des lames fonctionnelles et améliore d'autant plus la capacité associée.

Comme on peut le voir plus précisément sur la figure 3, la lame structurelle 101 présente notamment deux faces 101A et 101B. La lame structurelle 111 présente elle aussi notamment deux faces, dont l'une est référencée 111B. Lorsque les plis 100 et 110 sont superposés l'un sur l'autre, les lames structurelles 101 (représentée en blanc) et 111 (rainurée) entrent en contact au niveau de leurs faces respectives 101A et 111B, qui forment une interface de contact I₁₀₁₋₁₁₁ située dans le plan (Oxy).

Les figures 3 et 4 représentent de façon plus précise le contact entre deux lames structurelles 101 et 111 de deux plis adjacents 100 et 110, selon un premier mode de réalisation du procédé de la présente invention.

Sur la figure 3, la lame structurelle 101 présente une face inférieure 101A (non visible) et une face supérieure 101B. De même, la lame structurelle 111 présente une face inférieure 111A (non visible) et une face supérieure 111B. Lorsque les plis 100 et 110 sont superposés, les lames structurelles 101 et 111 entrent en contact au niveau d'une interface de contact I₁₀₁₋₁₁₁ située dans le plan (Oxy).

Comme on peut le voir sur la figure 4, la face inférieure 111B de la lame 111 est pourvue d'un ensemble de motifs rainurés R_{111B}, sur toute son étendue longitudinale, c'est-à-dire suivant l'axe (Oy). La face supérieure 101A de la lame 101 est également pourvue d'un ensemble de motifs rainurés R_{101A}, mais seulement sur une partie de son étendue longitudinale, suivant l'axe (Oy). Sur les faces 101A et 111B, les motifs rainurés R_{101A} et R_{111B} sont complémentaires et forment une série de rainures rectilignes parallèles entre elles. Ces motifs sont disposés sur les faces des lames de façon à couvrir l'interface de contact I₁₀₁₋₁₁₁. Leurs formes et leurs dimensions sont sensiblement identiques, de façon que ces motifs rainurés soient sensiblement complémentaires les uns des autres.

Ainsi, lorsque les lames 101 et 111 sont superposées l'une sur l'autre, les motifs rainurés R_{101A} et R_{111B} s'emboîtent au moins partiellement les uns dans les autres, ce qui permet de faire obstacle au glissement des deux lames 101 et 111 l'une par rapport à l'autre suivant un premier axe de blocage B₁, parallèle à l'axe (Oy), orthogonal à l'axe des rainures (Ox), dans le plan (Oxy) de l'interface de contact I₁₀₁₋₁₁₁. Cet obstacle est obtenu sans disposer de la colle au niveau de l'interface de contact I₁₀₁₋₁₁₁, évitant ainsi les inconvénients de la colle, notamment du point de vue écologique, mécanique et industriel. Par ailleurs, ces motifs rainurés peuvent servir de repères pour l' emboitement des lames ensemble, notamment dans le cadre d'un assemblage automatisé.

Dans cet exemple, les motifs rainurés ont une section de forme triangulaire, mais d'autres formes de motifs rainurés sont possibles, notamment des formes de section non triangulaire. Il peut être par exemple prévu une section carrée, rectangulaire ou encore en demi-cercle.

Pour que les motifs rainurés R_{101A} et R_{111B} restent moins partiellement emboîtés les uns dans les autres, au moins un système de maintien est prévu pour maintenir les lames l'une contre l'autre au niveau de l'interface de contact. Dans l'exemple des figures 3 et 4, le système de maintien comprend deux organes 30.1 et 30.2, répartis au niveau de l'interface de contact I₁₀₁₋₁₁₁, sous la forme d'une tige filetée métallique qui sera décrite plus en détails ci-dessous. Le système de maintien ne comprend ainsi pas de colle, toujours afin d'éviter - ou au moins de limiter - la quantité de colle présente dans l'élément constructif 10. Ce système de maintien assure le maintien des lames 101 et 111 l'une contre l'autre suivant l'axe (Oz) orthogonal au plan (Oxy) de l'interface de contact I₁₀₁₋₁₁₁. Les tiges filetées métalliques ont plusieurs avantages, dont la vitesse de pénétration et la résistance à l'arrachement dans le bois. Le maintien peut donc être assuré plus facilement, avec une fiabilité plus élevée et en minimisant le risque de fendre le bois.

Les figures 5 et 6 représentent de façon plus précise le contact entre deux lames structurelles 101 et 111 de deux plis adjacents 100 et 110, selon un deuxième mode de réalisation du procédé de la présente invention.

Sur la figure 5, on peut voir que la structure générale et la superposition des lames structurelles 101 et 111 sont semblables à celles de la figure 3.

Sur la figure 6, on peut voir plus précisément que la face 111B de la lame 111 est pourvue, d'une part, des motifs rainurés R_{111B}", sous la forme de rainures parallèles disposées sur toute l'étendue longitudinale de la lame, suivant l'axe (Ox), et d'autre part de motifs rainurés supplémentaires R_{111B}', sous forme de rainures parallèles disposées seulement sur une partie de l'étendue transversale et longitudinale de la lame 111, suivant l'axe (Oy), c'est-à-dire orthogonales aux rainures R_{111B}''. Inversement, la face 101A de la lame 101 est pourvue, d'une part des motifs rainurés R_{101A}', sous la forme de rainures parallèles disposées seulement sur une partie de l'étendue longitudinale de la lame 101, suivant l'axe (Ox), et d'autre part de motifs rainurés supplémentaires R_{101A}'', sous la forme de rainures parallèles disposées sur toute l'étendue longitudinale de la lame, suivant l'axe (Oy), c'est-à-dire orthogonales aux rainures R_{101A}'.

Dans cette configuration, les motifs rainurés R_{101A}', R_{101A}'', R_{111B}' et R_{111B}" sont agencés de manière à faire obstacle au glissement de la première lame et de la deuxième lame l'une par rapport à l'autre suivant deux axes de blocage B₁ et B₂ non-parallèles et situés dans le plan (Oxy) de l'interface de contact I₁₀₁₋₁₁₁ : le premier axe de blocage B₁, parallèle à l'axe (Ox), orthogonal aux rainures R_{111A}' et R_{111B}", et le deuxième axe de blocage B₂, parallèle à l'axe (Oy), orthogonal aux rainures R_{111A}'' et R_{111B}'. L'obstacle au glissement des lames 101 et 111 l'une par rapport à l'autre est ainsi obtenu dans l'ensemble du plan de l'interface de contact I₁₀₁₋₁₁₁, sans nécessiter de colle.

Dans cette configuration, la partie de l'interface de contact I₁₀₁₋₁₁₁ qui comprend les motifs rainurés R_{101A}', R_{101A}'', R_{111B}' et R_{111B}" se présente sous la forme de pointes P_{101A} et P_{111B}, dont les extrémités peuvent être ou non pointues selon les circonstances, notamment en fonction des conditions d'industrialisation. Sur la figure 6, on observe que ces pointes forment une matrice de picots dont la forme est sensiblement celle d'une pyramide à base quadrilatérale, en particulier à base carrée. Cette forme de picot s'avère plus facile à usiner. On comprendra que d'autres formes de motifs sont envisageables, par exemple à base triangulaire, ou encore à base de parallélogramme, notamment dans le cas où les axes des rainures ne sont pas orthogonaux.

Sur la figure 5, on voit que les lames sont maintenues ensemble suivant l'axe (Oz) par un système de maintien comprenant quatre organes 30.1, 30.2, 30.3 et 30.4, tous sous la forme de tiges filetées métalliques. Un nombre et une répartition différents de ces organes est néanmoins envisageable.

On comprendra que pour assurer un blocage des lames 101 et 111, il suffit que les motifs rainurés R_{101A}", R_{101A}'', R_{111B}' et R_{111B}" soient disposés sur au moins une partie de l'interface de contact I₁₀₁₋₁₁₁. Néanmoins, du point de vue mécanique, le blocage des lames sera d'autant meilleur que les faces sont pourvues de motifs rainurées sur toute l'interface de contact I₁₀₁₋₁₁₁. En outre, du point de vue industriel, les motifs rainurés peuvent être réalisés par un usinage des faces 101A et 111B. Dans ce cas, l'usinage peut être réalisé plus facilement, proprement et rapidement sur toute la longueur des lames, plutôt que sur une partie seulement de celles-ci.

Dans les exemples ci-dessus, les lames 101 et 111 sont orthogonales entre elles et les axes de blocage B₁ et B₂ sont eux-mêmes orthogonaux. Il peut être prévu d'autres exemples dans lesquels les lames 101 et 111 ne sont pas orthogonales mais inclinées l'une par rapport à l'autre, par exemple d'un angle proche de 45°. L'invention couvre plus généralement toute inclinaison possible entre deux lames structurelles.

Afin de renforcer la liaison mécanique entre les motifs rainurés des lames 101 et 111, ceux-ci sont constitués en bois de feuillus. Ce type de bois présente une plus grande densité, ce qui rend les motifs rainurés - de petites dimensions et donc potentiellement fragiles - plus solides et moins aptes à être arrachés sous l'effet des contraintes mécaniques. En outre, la résistance de l'assemblage ayant été améliorée, l'invention rend possible de recourir à du bois de feuillus avec des sections moindres et une qualité moindre, ce qui permet non seulement une économie lors de l'achat de la matière première, mais également une revalorisation de ces bois usuellement destinés à être brûlés pour produire de l'énergie.

Selon la présente invention, avant d'être maintenus ensemble par les organes 30.1 à 30.4, les motifs rainurés R_{101A}', R_{101A}'', R_{111B}' et R_{111B}" sont d'abord pressés les uns contre les autres. Cette pression préalable peut être assurée par différents moyens à la portée de l'homme du métier, par exemple par l'application d'un poids sur la lame supérieure. Dans le contexte particulier de lames à motifs rainurés, cela permet de faire s'emboîter plus précisément les motifs rainurés les uns dans les autres avant l'application des organes, ce qui améliore la précision de l'assemblage. La transmission des efforts et la résistance mécanique de l'assemblage sont également améliorées du fait de cette pression préalable. La pression utilisée selon l'invention pour réaliser cette mise sous pression des lames est égale ou supérieure à 75 kPa. A titre d'exemple, avec une interface de contact de forme carrée de 12 centimètres par 12 centimètres, une pression de 75 kPa revient à appliquer sur cette interface une masse de l'ordre de 110 kilogrammes.

Si cette pression augmente, en particulier si elle dépasse un seuil, qui peut être par exemple de l'ordre de 150 kPa les motifs rainurés peuvent être légèrement déformés. Cette déformation favorise le contact et la coopération des motifs rainurés entre eux, ce qui améliore d'autant la transmission des efforts entre les lames. Avec une interface de contact de forme carrée de 12 centimètres par 12 centimètres, une pression de 150 kPa revient à appliquer sur cette interface une masse de l'ordre de 220 kilogrammes.

Les figures 7 et 8 représentent le détail de l'agencement des organes dans le cas où s'agit de maintenir trois plis superposés ensemble. Les trois lames considérées, sont désignées par les références 101, 111 et 121, sont superposées deux à deux, c'est-à-dire que les lames 101 et 111 sont superposées au niveau de l'interface de contact I₁₀₁₋₁₁₁ et les lames 111 et 121 sont superposées au niveau de l'interface de contact I₁₁₁₋₁₂₁. Cet agencement peut être combiné avec les modes de réalisation précédents. Il peut en particulier s'adapter à un nombre supérieur de plis et de lames superposés.

Sur la figure 7, le système de maintien comprend un premier ensemble d'organes - ou tiges filetées - 30.1 et 30.2 traversant les lames 101 et 111 au niveau de l'interface de contact I₁₀₁₋₁₁₁ et un deuxième ensemble d'organes - ou tiges filetées - 30.5 et 30.6 traversant les lames 111 et 121 au niveau de l'interface de contact I₁₁₁₋₁₂₁. De cette façon, la lame intermédiaire 111 est traversée par les deux ensembles d'organes, ce qui assure une continuité dans l'assemblage et le maintien des lames entre elles. Pour que la lame 111 soit ainsi doublement traversée, les organes 30.1 (respectivement 30.2) sont décalés par rapport aux organes 30.5 (respectivement 30.5) dans le plan (Oxy) des deux interfaces de contact.

Cette configuration permet d'éviter qu'un seul organe (par exemple l'organe 30.1) traverse l'ensemble des lames 101, 111 et 121. On comprend que si cela reste possible dans une configuration à trois plis, l'utilisation d'une même tige filetée pour traverser une configuration par exemple à sept ou huit plis nécessiterait une tige plus longue, plus épaisse qui serait plus chère et moins précise pour l' assemblage des lames. Au contraire, avec des organes ainsi décalés, ceux-ci peuvent être courts et la multitude d'organes augmente localement les interactions avec les motifs rainurés, ce qui améliore la transmission des efforts.

Sur la figure 8, l'élément constructif 10 comporte un nombre de plis supérieur à trois. Alors des organes additionnels 30.9 et 30.10 (ainsi que deux autres organes non représentés sur les figures) sont ajoutés, pour maintenir la lame 121 avec les lames des plis situés au-dessus d'elle. Comme on peut le voir, les organes 30.1 (respectivement 30.2) sont alignés avec les organes 30.9 (respectivement 30.10).

Les organes représentés sur les figures 7 et 8 sont destinés à traverser deux plis et donc deux lames. Dans ce cas, leurs longueurs respectives L₃₀ sont sensiblement égales à l'épaisseur cumulée des deux lames E₁₀₁ et E₁₁₁ (représentées sur la figure 12) qu'elles traversent et maintiennent ensemble. Cela a pour effet de permettre une pénétration des organes sur toute l'épaisseur des lames, ce qui augmente la proportion de matière sollicitée et, de fait, améliore la résistance à l'arrachement de l'organe dans le bois.

Alternativement, il pourrait être prévu que ces organes traversent un nombre plus élevé de plis et de lames. Dans ce cas, il reste préférable, selon l'invention, qu'au moins un premier organe traverse une première partie des plis, qu'un deuxième organe traverse une deuxième partie des plis, les première et deuxième parties de plis ayant au moins un pli en commun, les premier et deuxième organes étant au moins légèrement décalés.

La figure 9 représente un exemple de répartition des différents organes du système de maintien sur l'interface de contact entre plusieurs lames structurelles.

Dans cette configuration, l'élément constructif 10 est formé d'au moins trois plis superposés, dont on voit les lames 101 et 111 (la lame 121 n'étant pas représentée pour des raisons de clarté). Le système de maintien 30 est pourvu de plusieurs ensembles d'organes, dont un premier ensemble de quatre organes 30.1, 30.2, 30.3 et 30.4 et un deuxième ensemble de quatre organes 30.5, 30.6, 30.7 et 30.8. Les quatre organes 30.1 à 30.4 sont prévus pour maintenir l'une contre l'autre les lames 101 et 111 au niveau de l'interface de contact I₁₀₁₋₁₁₁. Les quatre organes 30.5 à 30.8 sont prévus pour maintenir l'une contre l'autre les lames 111 et 121 (non représentée) au niveau de l'interface de contact I₁₁₁₋₁₂₁. Cette configuration reprend donc le principe d'un maintien de deux lames par quatre organes (comme représenté sur la figure 5) et le principe de prévoir des organes pour maintenir ensemble une partie seulement des lames (comme illustré par les figures 7 et 8). Les organes 30.1 à 30.8 se présentent encore sous la forme de tiges filetées métalliques. Comme on peut le voir sur la figure 9, les organes du premier ensemble et ceux du deuxième ensemble sont légèrement décalés, pour permettre à ces organes de traverser une lame commune, en l'occurrence la lame 111, sans se faire obstacle.

Afin de réaliser un maintien optimal, pour chaque interface de contact, les quatre organes d'un même ensemble sont répartis à proximité des bords de l'interface, tout en veillant à respecter un écart avec le bord afin d'éviter de fendre le bois. Ainsi, il est préféré de disposer les organes 30.1 à 30.4 représentés sur la figure 9 à une distance D₁₀₋₃₀ du bord de l'interface I₁₀₁₋₁₁₁ (représentée sur la figure 12) qui soit comprise entre 1,5 et 4 centimètres.

Les figures 10A et 10B montrent de façon plus précise le positionnement d'un système de maintien au niveau de l'interface de contact. Comme on peut le voir, les motifs rainurés forment un ensemble de picots P. L'organe 30.1 qui y est représenté est positionné dans un creux des motifs rainurés, désigné ici par la référence C₁₂₃₄, à l'intersection des rainures R_{T12}, R_{T34}, R_{L14} et R_{L23}. Dans ce cas, le diamètre de la tige 31.1 de l'organe 30.1 est tel que l'étendue de l'organe 30.1 sur l'interface de contact I₁₀₁₋₁₁₁ est limitée aux quatre motifs P₁, P₂, P₃ et P₄. L'organe 30.1 ne couvre donc que deux motifs rainurés dans chaque axe, à savoir les motifs R_{L23} et R_{L14} dans l'axe (Ox) et le motif R_{T12} et R_{T34} dans l'axe (Oy). Il ne couvre donc au plus que quatre motifs rainurés.

Les figures 11A et 11B représentent un exemple d'organe à tige filetée métallique 30.1 du système de maintien 30, qui peut s'appliquer à tous les organes 30.1, 30.2 et suivants qui ont été déjà décrits.

L'organe 30.1 de longueur L₃₀ comprend une tige filetée métallique 31 de forme générale cylindrique. Cette tige comprend à ses extrémités opposées une tête 32 et une pointe 33. La tête 32 est formée de deux sous-parties 32' et 32" de diamètre différents. La partie supérieure 32' est pourvue d'un évidement complémentaire d'un outil de vissage. La tige 31 est pourvue d'un filetage, qui peut être un filetage simple ou double.

Dans la configuration de la figure 11A, le filetage de la tige 31 comprend deux filetages 34' et 34", enchevêtrés et de diamètres différents. L'intérêt de ce filetage tient au fait que la performance d'un filetage dépend de son pas et son diamètre. Plus le pas du filetage est grand, plus la tige pénètre vite dans le bois. Plus le diamètre du filetage est grand, plus il fait travailler localement le bois en cisaillement. La configuration à deux filetages enchevêtrés et de diamètres différents assure le travail local du bois dans deux plans de cisaillement différents, ce qui permet de renforcer la résistance mécanique de l'assemblage et de réduire le temps de pénétration de la vis.

Il importe néanmoins que le filetage reste suffisamment étroit, notamment pour les lames en bois de feuillus. Aussi, le rapport entre le diamètre du filetage le plus large et le diamètre de la tige est préférentiellement compris entre 1,5 et 1,7.

L'invention propose un procédé pour fabriquer un élément constructif 10 tel que décrit ci-dessus. Ce procédé implique de partir de lames structurelles déjà pourvues de motifs rainurés sur leurs interfaces de contact respectives. Alternativement, il peut être prévu de pourvoir ces lames de motifs rainurés, par exemple en usinant leurs faces destinées à être superposées.

Selon l'invention, les lames 101 et 111 déjà pourvues des motifs rainurés R_{101A} et R_{111B} sont superposées de manière que ces motifs rainurés viennent en contact les uns sur les autres au niveau de l'interface de contact I₁₀₁₋₁₁₁. A cet égard, il peut être tiré profit de la forme complémentaire des motifs rainurés R₁₀₁ₐ et R_{111B} pour les rapprocher jusqu'à ce qu'ils s'emboîtent au moins en partie, ce qui permet de réaliser cette étape de superposition avec une précision importante.

Par suite, les lames 101 et 111 sont mises sous pression, c'est-à-dire pressées l'une contre l'autre, au niveau de l'interface de contact I₁₀₁₋₁₁₁. Les motifs rainurés R_{101A} et R_{111B} sont ainsi préalablement pressés avant d'être effectivement maintenus ensemble. Cette étape de mise sous pression peut être réalisée par différents moyens à la portée de l'homme du métier, par exemple par l'application d'un poids sur la lame supérieure.

La pression utilisée est égale ou supérieure à 75 kPa, comme on l'a déjà indiqué ci-dessus. En fonction du niveau de pression, les motifs rainurés seront emboîtés (ce que ne permet pas la majeure partie du temps, une simple superposition) voire écrasés et ainsi légèrement déformés, ce qui améliore la transmission des efforts entre les lames ainsi superposées et la résistance mécanique de l'assemblage.

Enfin, les lames 101 et 111 ainsi superposées et mises sous pression sont maintenues l'une contre l'autre grâce à un système de maintien 30, en particulier une ou plusieurs tiges métalliques filetées disposées au niveau de l'interface de contact I₁₀₁₋₁₁₁ et traversant l'épaisseur des lames. Les lames sont alors maintenues l'une contre l'autre, non seulement avec une précision de positionnement importante mais aussi avec une meilleure transition des efforts entre elles.

Ce procédé peut être répété afin d'assembler toutes les lames et tous les plis d'un même élément constructif 10, permettant ainsi une fabrication complète.

Bien entendu, la présente invention n'est pas limitée aux exemples et aux modes de réalisation décrits et représentés, mais elle est susceptible de nombreuses variantes accessibles à l'homme de l'art tant que celles-ci tombent dans l'étendue de l'invention tel que définie par les revendications.

En particulier, les différentes formes de connecteurs qui ont été décrites ci-dessus - ainsi que d'autres formes à la portée de l'homme du métier à la lecture de la présente description - peuvent être combinées à l'intérieur d'un même système constructif, en fonction des avantages de chacun et des besoins spécifiques du système constructif.

## Revendications

1. Procédé de fabrication d'un élément constructif (10), comprenant les étapes suivantes :
- pourvoir au moins partiellement la face supérieure (101A) d'une première lame structurelle (101) d'un ensemble de motifs rainurés (R_{101A}) ;
- pourvoir au moins partiellement la face inférieure (111B) d'une deuxième lame structurelle (111) d'un ensemble de motifs rainurés (R_{111B}) de formes au moins sensiblement complémentaires à celles des motifs rainurés de la face supérieure de la première lame (R_{101A}) ;
- superposer la première lame (101) et la deuxième lame (111) de manière que les motifs rainurés de la face supérieure de la première lame (R_{101A}) et les motifs rainurés de la face inférieure de la deuxième lame (R_{111B}) soient en contact les uns avec les autres au niveau d'une interface de contact (I₁₀₁₋₁₁₁), de manière à faire obstacle au glissement de la première lame (101) et de la deuxième lame (111) l'une par rapport à l'autre suivant au moins un axe (B₁) ;
- maintenir la première lame (101) et la deuxième lame (111) l'une contre l'autre par un système de maintien (30) comprenant au moins un organe à tige filetée métallique (30.1) traversant au moins partiellement la première lame (101) et la deuxième lame (111) au niveau de l'interface de contact (I₁₀₁₋₁₁₁) ; et
- **caractérisé en ce qu'**il comprend une étape consistant à, avant de maintenir ensemble la première lame (101) et deuxième lame (111) par le système de maintien (30), mettre sous pression la première lame (101) et la deuxième lame (111) l'une contre l'autre avec une pression d'au moins 75 kPa de sorte que les motifs rainurés (R_{101A}, R_{111B}) soient légèrement déformés.

2. Procédé de fabrication selon la revendication 1, dans lequel la première lame (101) et la deuxième lame (111) sont mise sous pression l'une contre l'autre avec une pression de l'ordre de 150 kPa.

3. Procédé de fabrication selon la revendication 1 ou 2, dans lequel les motifs rainurés (R_{101A}, R_{111B}) sont agencés de manière à faire obstacle au glissement de la première lame (101) et de la deuxième lame (111) l'une par rapport à l'autre suivant au moins deux axes non-parallèles (B₁, B₂).

4. Procédé de fabrication selon la revendication 3, dans lequel les motifs rainurés comprennent une première série de rainures parallèles entre elles (R_{101A'}, R_{111B'}), et une deuxième série de rainures parallèles entre elles (R_{101A"}, R_{111B"}) mais non parallèles aux rainures de la première série.

5. Procédé de fabrication selon la revendication 4, dans lequel au moins une partie des motifs rainurés (R_{101A'}, R_{101A"}, R_{111B'}, R_{111B"}) présente la forme d'une matrice de picots (P), dont les formes sont sensiblement celles d'une pyramide à base quadrilatérale.

6. Procédé de fabrication selon l'une des revendications précédentes, dans lequel l'organe à tige filetée métallique (30.1) comprend une tige filetée (31) pourvue d'une tête (32) et d'une pointe (33) disposées à des extrémités opposées de la tige.

7. Procédé de fabrication selon l'une des revendications précédentes, dans lequel l'organe à tige filetée métallique (30.1) présente une forme générale cylindrique.

8. Procédé de fabrication selon l'une des revendications précédentes, dans lequel l'organe à tige filetée métallique (30.1) comprend au moins deux filetages (34', 34") enchevêtrés et de diamètres différents

9. Procédé de fabrication selon l'une des revendications précédentes, dans lequel le système de maintien (30) comprend quatre organes à tiges filetées métalliques (30.1, 30.2, 30.3, 30.4) répartis sur l'ensemble de l'interface de contact (I₁₀₁₋₁₁₁) et traversant au moins partiellement la première lame (101) et la deuxième lame (111) au niveau de l'interface de contact (I₁₀₁₋₁₁₁).

10. Procédé de fabrication selon la revendication 9, dans lequel la distance (D₁₀₋₃₀) qui sépare au moins l'une des organes (30.1) du bord de l'interface de contact est 30 comprise entre 1, 5 et 4 centimètres.

11. Procédé de fabrication selon l'une des revendications précédentes, comprenant au moins trois lames structurelles en bois (101, 111, 121) dont au moins certaines des faces (101A, 111B, 111A, 121B) sont deux à deux superposées au niveau d'interfaces de contact respectives (I₁₀₁₋₁₁₁, I₁₁₁₋₁₂₁), dans lequel le système de maintien (30) comprend un premier ensemble d'organes à tiges filetées métalliques (30.1, 30.2, 30.3, 30.4) traversant au moins partiellement une première partie des lames (101, 111) et un deuxième ensemble d'organes à tiges filetées métalliques (30.5, 30.6, 30.7, 30.8) traversant au moins partiellement une deuxième partie des lames (101, 111), la première et la deuxième parties de lames ayant au moins une lame en commun (111), les organes (30.1, ... , 30.8) étant décalées les uns par rapport aux autres dans les plans des interfaces de contact des lames (I₁₀₁₋₁₁₁, I₁₁₁₋₁₂₁).

12. Procédé de fabrication selon la revendication 11, dans lequel la longueur d'au moins l'une des organes (L₃₀) est sensiblement égale à l'épaisseur cumulée de la partie de lames qu'il est destiné à maintenir ensemble (E₁₀₁ + E₁₁₁).

13. Procédé de fabrication selon l'une des revendications précédentes, dans lequel au moins l'un des organes (30.1) est positionné dans un creux des motifs rainurés (C₁₂₃₄).

14. Procédé de fabrication selon la revendication 11 ou 12, dans lequel le diamètre d'au moins l'une des organes (D₃₀) est configuré pour couvrir au plus quatre motifs rainurés (R_{L14}, R_{L23}, R_{T12}, R_{T34}).

## Patentansprüche

1. Verfahren zur Herstellung eines Bauelements (10), das die folgenden Schritte umfasst:
- Ausstatten zumindest teilweise der oberseitigen Fläche (101A) einer ersten strukturellen Platte (101) mit einem Satz von gerillten Mustern (R_{101A});
- Ausstatten zumindest teilweise der unterseitigen Fläche (111B) einer zweiten strukturellen Platte (111) mit einem Satz von gerillten Mustern (R_{111B}), deren Formen zumindest im Wesentlichen komplementär zu denen der gerillten Muster der oberseitigen Fläche der ersten Platte (R_{101A}) sind;
- Übereinanderlegen der ersten Platte (101) und der zweiten Platte (111), sodass die gerillten Muster der oberseitigen Fläche der ersten Platte (R_{101A}) und die gerillten Muster der unterseitigen Fläche der zweiten Platte (R_{111B}) an einer Kontaktschnittstelle (I₁₀₁₋₁₁₁) miteinander in Kontakt stehen, sodass ein Verrutschen der ersten Platte (101) und der zweiten Platte (111) relativ zueinander entlang mindestens einer Achse (B₁) verhindert wird;
- Halten der ersten Platte (101) und der zweiten Platte (111) durch ein Haltesystem (30) gegeneinander, das mindestens ein metallisches Gewindestangenglied (30.1) umfasst, das die erste Platte (101) und die zweite Platte (111) an der Kontaktschnittstelle (I₁₀₁₋₁₁₁) zumindest teilweise durchquert; und
- **dadurch gekennzeichnet, dass** es einen Schritt umfasst, der darin besteht, vor dem Zusammenhalten der ersten Platte (101) und der zweiten Platte (111) durch das Haltesystem (30), die erste Platte (101) und die zweite Platte (111) mit einem Druck von mindestens 75 kPa gegeneinander unter Druck zu setzen, sodass die gerillten Muster (R_{101A}, R_{111B}) leicht verformt werden.

2. Herstellungsverfahren nach Anspruch 1, wobei die erste Platte (101) und die zweite Platte (111) mit einem Druck in der Größenordnung von 150 kPa gegeneinander unter Druck gesetzt werden.

3. Herstellungsverfahren nach Anspruch 1 oder 2, wobei die gerillten Muster (R_{101A}, R₁₁₁₈) so angeordnet sind, dass sie ein Verrutschen der ersten Platte (101) und der zweiten Platte (111) relativ zueinander entlang mindestens zweier nicht paralleler Achsen (B₁, B₂) verhindern.

4. Herstellungsverfahren nach Anspruch 3, wobei die gerillten Muster eine erste Reihe von zueinander parallel verlaufenden Rillen (R_{101A'}, R_{111B'}) und eine zweite Reihe von zueinander parallel verlaufenden Rillen (R_{101A"}, R_{111B"}) umfassen, die jedoch nicht parallel zu den Rillen der ersten Reihe sind.

5. Herstellungsverfahren nach Anspruch 4, wobei mindestens ein Teil der gerillten Muster (R_{101A'}, R_{101A"}, R_{111B"}, R_{111B"}) die Form einer Stiftmatrix (P) aufweist, deren Formen im Wesentlichen denen einer Pyramide mit vierseitiger Basis entsprechen.

6. Herstellungsverfahren nach einem der vorhergehenden Ansprüche, wobei das metallische Gewindestangenglied (30.1) eine Gewindestange (31) umfasst, die mit einem Kopf (32) und einer Spitze (33) versehen ist, die an gegenüberliegenden Enden der Stange angeordnet sind.

7. Herstellungsverfahren nach einem der vorhergehenden Ansprüche, wobei das metallische Gewindestangeglied (30.1) eine allgemein zylindrische Form aufweist.

8. Herstellungsverfahren nach einem der vorhergehenden Ansprüche, wobei das metallische Gewindestangenglied (30.1) mindestens zwei ineinandergreifende Gewinde (34', 34") mit unterschiedlichen Durchmessern umfasst.

9. Herstellungsverfahren nach einem der vorhergehenden Ansprüche, wobei das Haltesystem (30) vier metallische Gewindestangenglieder (30.1, 30.2, 30.3, 30.4) umfasst, die über die gesamte Kontaktschnittstelle (I₁₀₁₋₁₁₁) verteilt sind und die erste Platte (101) und die zweite Platte (111) an der Kontaktschnittstelle (I₁₀₁₋₁₁₁) zumindest teilweise durchqueren.

10. Herstellungsverfahren nach Anspruch 9, wobei der Abstand (D₁₀₋₃₀), der mindestens eines der Glieder (30.1) vom Rand der Kontaktschnittstelle trennt, 30 zwischen 1,5 und 4 Zentimetern liegt.

11. Herstellungsverfahren nach einem der vorhergehenden Ansprüche, umfassend mindestens drei strukturelle Holzplatten (101, 111, 121), von denen mindestens einige der Flächen (101A, 111B, 111A, 121B) paarweise an jeweiligen Kontaktschnittstellen (I₁₀₁₋₁₁₁, I₁₁₁₋₁₂₁) übereinanderliegen, wobei das Haltesystem (30) einen ersten Satz metallischer Gewindestangenglieder (30.1, 30.2, 30.3, 30.4), die mindestens teilweise einen ersten Teil der Platte (101, 111) durchqueren, und einen zweiten Satz metallischer Gewindestangenglieder (30.5, 30.6, 30.7, 30.8), die mindestens teilweise einen zweiten Teil der Platte (101, 111) durchqueren, umfasst, wobei der erste und der zweite Teil der Platte mindestens ein gemeinsames Platte (111) aufweisen, wobei die Glieder (30.1, ... , 30.8) in den Ebenen der Kontaktschnittstellen der Platten (I₁₀₁₋₁₁₁, I₁₁₁₋₁₂₁) zueinander versetzt sind.

12. Herstellungsverfahren nach Anspruch 11, wobei die Länge des mindestens einen der Glieder (L₃₀) im Wesentlichen gleich der kumulativen Dicke des Teils der Platten ist, die es zusammenhalten soll (E₁₀₁ + E₁₁₁).

13. Herstellungsverfahren nach einem der vorhergehenden Ansprüche, wobei mindestens eines der Glieder (30.1) in einer Vertiefung der gerillten Muster (C₁₂₃₄) positioniert ist.

14. Herstellungsverfahren nach Anspruch 11 oder 12, wobei der Durchmesser des mindestens einen der Glieder (D₃₀) so konfiguriert ist, dass er höchstens vier gerillte Muster (R_{L14}, R_{L23}, R_{T12}, R_{T34}) abdeckt.

## Claims

1. Method for manufacturing a constructive element (10), comprising the following steps:
- at least partially providing the upper face (101A) of a first structural plate (101) with a set of grooved patterns (R_{101A});
- at least partially providing the lower face (111B) of a second structural plate (111) with a set of grooved patterns (R_{111B}) with shapes at least substantially complementary to those of the grooved patterns of the upper face of the first plate (R101A);
- superimposing the first plate (101) and the second plate (111) so that the grooved patterns of the upper face of the first plate (R_{101A}) and the grooved patterns of the lower face of the second plate (R_{111B}) are in contact with each other at a contact interface (I₁₀₁₋₁₁₁), so as to hinder the sliding of the first plate (101) and of the second plate (111) relative to each other along at least one axis (B₁);
- retaining the first plate (101) and the second plate (111) against each other by a retaining system (30) comprising at least one metal threaded rod member (30.1) at least partially passing through the first plate (101) and the second plate (111) at the contact interface (I₁₀₁₋₁₁₁); and
- **characterized in that** it comprises a step consisting in, before retaining together the first plate (101) and the second plate (111) by the retaining system (30), putting under pressure the first plate (101) and the second plate (111) against each other with a pressure of at least 75 kPa so that the grooved patterns (R_{101A}, R_{111B}) are slightly deformed.

2. Manufacturing method according to claim 1, wherein the first plate (101) and the second plate (111) are put under pressure against each other with a pressure of the order of 150 kPa.

3. Manufacturing method according to claim 1 or 2, wherein the grooved patterns (R_{101A}, R_{111B}) are arranged so as to hinder the sliding of the first plate (101) and of the second plate (111) relative to each other along at least two non-parallel axes (B₁, B₂).

4. Manufacturing method according to claim 3, wherein the grooved patterns comprise a first series of grooves parallel to each other (R_{101A'}, R_{111B'}), and a second series of grooves parallel to each other (R_{101A"}, R_{111B"}) but not parallel to the grooves of the first series.

5. Manufacturing method according to claim 4, wherein at least one part of the grooved patterns (R_{101A'}, R_{101A"}, R_{111B"}, R_{111B"}) have the shape of a matrix of pins (P), the shapes of which are substantially those of a pyramid with a quadrilateral base.

6. Manufacturing method according to one of the preceding claims, wherein the metal threaded rod member (30.1) comprises a threaded rod (31) provided with a head (32) and a tip (33) arranged at opposite ends of the rod.

7. Manufacturing method according to one of the preceding claims, wherein the metal threaded rod member (30.1) has a generally cylindrical shape.

8. Manufacturing method according to one of the preceding claims, wherein the metal threaded rod member (30.1) comprises at least two interlocking threads (34', 34") of different diameters.

9. Manufacturing method according to one of the preceding claims, wherein the retaining system (30) comprises four metal threaded rod members (30.1, 30.2, 30.3, 30.4) distributed over the entire contact interface (I₁₀₁₋₁₁₁) and at least partially passing through the first plate (101) and the second plate (111) at the contact interface (I₁₀₁₋₁₁₁).

10. Manufacturing method according to claim 9, wherein the distance (D₁₀₋₃₀) that separates at least one of the members (30.1) from the edge of the contact interface is 30 comprised between 1.5 and 4 centimetres.

11. Manufacturing method according to one of the preceding claims, comprising at least three wooden structural plates (101, 111, 121) of which at least some of the faces (101A, 111B, 111A, 121B) are in pairs superimposed at respective contact interfaces (I₁₀₁₋₁₁₁, I₁₁₁₋₁₂₁), wherein the retaining system (30) comprises a first set of metal threaded rod members (30.1, 30.2, 30.3, 30.4) at least partially passing through a first part of the plates (101, 111) and a second set of metal threaded rod members (30.5, 30.6, 30.7, 30.8) at least partially passing through a second part of the plates (101, 111), the first and second parts of plates having at least one plate in common (111), the members (30.1, ... , 30.8) being offset from each other in the planes of the contact interfaces of the plates (I₁₀₁₋₁₁₁, I₁₁₁₋₁₂₁).

12. Manufacturing method according to claim 11, wherein the length of the at least one of the members (L₃₀) is substantially equal to the cumulative thickness of the part of plates that it is intended to retain together (E₁₀₁ + E₁₁₁).

13. Manufacturing method according to one of the preceding claims, wherein at least one of the members (30.1) is positioned in a recess of the grooved patterns (C1234).

14. Manufacturing method according to claim 11 or 12, wherein the diameter of the at least one of the members (D₃₀) is configured to cover at most four grooved patterns (R_{L14}, R_{L23}, R_{T12}, R_{T34}).
